# EUROPEAN PATENT APPLICATION

(11) **EP 2 814 257 A1**
(43) Date of publication of application: **17.12.2014**
(21) Application number: 13305809.9
(22) Date of filing: 14.06.2013
(51) Int. Cl.: H04N 21/234, H04L 29/06, H04L 12/723

(54) **Ingress stage module for a packet switching fabric for multicasting a video stream in a network**

(71) Applicant: ALCATEL LUCENT, 92100 Boulogne-Billancourt (FR)
(72) Inventor: Lespagnol, Albert, 78141 Vélizy (FR)
(74) Representative: Sayettat, Julien Christian

(57) **Abstract**

Ingress stage module (1) for a packet switching fabric (SF) for broadcasting an original video program (OP) to groups of users over at least one dedicated path (a-f) in a network, comprising means for receiving packets of the program (OP), means for extracting a label for each of them and means for storing them, further comprising means for sending to a switching module (5), for each of the packets, the label and the local address wherein it is stored, so that they will be forwarded to egress ports (3a, 3b, 3d, 3e) according to said labels, the program (OP) comprising at least one avail wherein a secondary video program (sp1-sp4) can be inserted, the module (1) comprising a receiver with means for monitoring the program (OP) to detect the occurrence of said avail, and means for sending to a control processor a signal upon such a detection, so that said processor retrieves and transmits packets of a program (sp1-sp4) to the module (1), the module (1) further storing them and sending to the switching module (5) a label for each of them, so that they will be forwarded to said egress ports according to said secondary labels to be inserted in said avail.

## Description

The invention relates to an ingress stage module for a packet switching fabric for broadcasting an original video program to groups of users over at least one dedicated path in a network, such as a packet switching fabric comprising such an ingress stage module.

Video over broadband packet networks is becoming a very popular service that is declined into many variants, such as broadcast television services, Video on demand (VoD) services, or Over-The-Top (OTT) television services.

Such services globally run according to a common process, which is described hereinafter. A head end element first receives a video content, for example a video program, which is to be broadcasted, for example from a satellite. Thus, the head end element prepares the transmission of the video program across a network by encoding said video program, for example according to a Moving Picture Experts Group (MPEG) standard, and by encapsulating said encoded program into packets to be emitted into the network.

The network can be notably implemented by the IP (Internet Protocol) protocol, the MPLS (Multi Protocol Label Switching) protocol, or the Ethernet protocol. Moreover, the video program can be broadcasted point to point, i.e. sent to a single destination, or multicast, i.e. sent to several destinations that are spread all over the network.

The role of the broadband network is to carry the encoded video program from the head-end element to the users. To do so, the packets of the encoded video program can be transmitted on a stream along a multicast tree comprising several paths, which allows an efficient use of the networks resources, notably the bandwidth. In particular, a broadcast television service requires a scalable multicast network for an efficient distribution of television channels, because of a very numerous audience of viewers. Indeed, a unicast network would not be appropriate for an audience of millions of viewers, because no infrastructure can send thousands of independent streams from the same source in parallel. The multicast tree is limited to a minimum subset of paths that are necessary to convey the video program to the users that have requested it. In particular, the multicast tree comprises several multicast points that are dispatched over the network, at least one set-top-box of a user being connected to each of end points of the multicast tree for decoding the video stream before providing it to a terminal, such as a television set, of said user.

For allowing the switch between video programs, there are several methods. In particular, the Digital Program Insertion (DPI) process can be considered as a specific utilisation of video program switching and will be described in further details hereinafter.

In the DPI process, at least one secondary video program is inserted punctually in an original video program during the broadcast of said original video program. To do so, the original video program comprises dedicated periods, called avails, wherein a secondary video program can be inserted. In particular, an avail starts in the original video program with a splice-in point and ends with a splice-out point, which are each signalled in the original video program by a dedicated cue shortly after their occurring, and the DPI process relies on the detection of said cues.

To perform a DPI process, the network comprises a splicer element that comprises means for monitoring continuously the original video program to detect the cues of an avail, such as means for inserting a secondary video program instead of said avail when such a cue appears.

In particular, the secondary video program is stored in a server. When the splicer element detects in the original video program a cue corresponding to the beginning of an avail, said splicer element sends a request to the server for retrieving the secondary video program. In a same way, when the splicer element detects in the original video program a cue corresponding to the ending of the avail, said splicer element sends a request to the server for stopping the retrieval of the secondary video program.

There exist several standards for implementing the DPI process, notably for managing the interoperability between the server(s), the splicer elements(s) and the head end elements, or for defining the cue messages and the Application Programming Interfaces (API) for implementing said interoperability. In particular, the Society of Cable Telecommunications Engineers (SCTE) association has provided several articles about the DPI process, such as the article entitled "Digital Program Insertion Cueing Message for Cable" (ANSI/SCTE 35 2001 "DVS253"), that concerns splicing of MPEG streams for Digital Program Insertion, and the article entitled "Digital Program Insertion Splicing API" (ANSI/SCTE 30 2001 "DVS380" ), that concerns the standardized methods for communication between servers and splicer elements for the insertion of video content into any MPEG video stream.

Many applications can be envisaged for the DPI process, as for example an insertion of spot advertisement video programs of different lengths, a program substitution, or an insertion of public service announcement video programs.

In particular, the DPI process can be advantageously implemented for inserting addressable advertisement video programs, i.e. advertisements that targets specific groups of users, into an original video program. For instance, the DPI process could enable IPTV (Internet Protocol Television) operators to insert locally-generated commercial or short programs into remotely distributed video programs before delivering them to users, which could generate significant revenues. To do so, several variants of this general advertisement insertion process can be envisaged.

For example, advertisers can implement a thematic targeting DPI process by buying advertisement space on television channels that cater the group of users they want to reach. Thus, an advertiser working for a golf ball manufacturer would be interested in buying airtime of a television channel that is dedicated to golf sport.

Besides, advertisers can implement a geographic addressable DPI process in the closest network element to the users, so that they can target a group of users with a more homogeneous profile in terms of way of life and expenditures.

Moreover, advertisers can also implement a home addressable DPI process by delivering different commercial advertisement video programs to different households that watch the same original video program, so as to deliver said advertisement programs to each user that has the greatest chance of making a positive economic difference. To do so, multiple household profiles can be proposed to advertisers within the same original video program. Thus, for example, a first advertiser can buy a space in a video program to insert video advertisement programs targeting young couples expecting a child, whereas another advertiser can buy another space in the same video program to insert video advertisement programs targeting dog owners.

In the known implementations of DPI processes, the splicing function is always implemented by at least one dedicated server (or splicer element) in the network. In particular, the network can comprise a centralized splicer element or several distributed splicer elements.

In the first solution, the original video programs that are to be submitted to a digital program insertion are de-routed from the normal data path to the dedicated splicer server. This splicer server comprising means for monitoring the occurrence of avails in the original video programs, means for sending requests to the server(s) containing secondary video programs so as to retrieve packets of said secondary video programs, and means for inserting said secondary video programs instead of said avails in said original video programs.

However, this solution encounters a certain number of shortcomings. As the DPI process is implemented to broadcast advertisement video programs, the most relevant possible target must be reached, either by a geographic addressability approach, or by a home addressability approach.

By implementing a single splicer server in the network, toward which the original video program is redirected and from which n different video streams, which comprise said original program with different inserted secondary programs, are emitted for n different audiences, the video programs are distributed over a tree which is really different from the normal distribution tree generally employed for broadcast television programs. In particular, the total length of this tree is increasing, which implies important bandwidth consumption and important cost. Thus, this solution would be sufficient for a single targeted audience, but would be difficult to implement for an important number of different audiences, especially in the case when said number is close to the total number of users subscribing to the original video program.

In the second solution, several splicer elements are implemented in the normal data path of the network, notably at the network nodes wherein at least one downstream leg leads to a user group to be targeted by a secondary video program. In particular, a same secondary video program can be inserted in the original video program at several network nodes of the normal multicast tree.

This solution allows decreasing drastically the bandwidth consumption. In particular, although dedicated bandwidth consumption is necessary to convey secondary video programs deep in the network, this is a quite minor drawback, since a secondary program lasts only a few minutes, so that the allocated bandwidth is used only on a relative short period of time.

Nevertheless, this solution requires a significant number of splicer elements to be really efficient. Indeed, the more splicer elements are implemented in the network, the lowest bandwidth consumption will be. Thus, network operators may invest in a great deal of splicer elements, ultimately at each multicast point of the distribution tree, to guarantee a great Quality of Service (QoS) for their splicing service, notably in terms of granularity.

Moreover, the cost of splicer elements is significant, as they use dedicated high performance technologies, such as high speed network interfaces, memory, processors and packaging.

Besides, this second solution is relatively complex, as each splicer element requires a dedicated management. In particular, if the splicer element is a network element, it must support the full features of the FCAPS (Fault Configuration Accounting Performance and Security) network management standard. Moreover, if the splicer element is embedded in a network element, for example on a specific board, the existing management capabilities of the network element can be leveraged to apply to said element, but there is still a noticeable complexity.

This solution also requires a complex connection management, as the video traffic must be de-routed from the normal data path to a splicer element for applying a DPI process, and thus be reoriented back to said normal path. This operation is difficult to implement with a standard path control protocol, such as the Resource Reservation Protocol (RSVP) or the Label Distribution Protocol (LDP). To simplify connection management, the normal data path can be provisioned from a centralized manager element that uses a management protocol, such as the Simple Network Management Protocol (SNMP), but this option lacks of flexibility.

The invention aims to improve the prior art by removing the need for splicer elements. In particular, the invention proposes to perform a DPI process directly in the normal data path by embedding the DPI function into the switching fabric of the network nodes, instead of using dedicated equipment for such performance.

For that purpose, and according to a first aspect, the invention related to an ingress stage module for a packet switching fabric for broadcasting an original video program to groups of users over at least one dedicated path in a network, said ingress stage module comprising means for receiving packets of said original video program, means for extracting a label for each of said packets and means for storing said packets into a packet buffer, said ingress stage module further comprising means for sending to a switching module of said fabric, for each of the packets, the label of said packet and the local address in the packet buffer wherein said packet is stored, so that said packets will be forwarded to the ports of an egress stage module for broadcasting according to said labels, the original video program comprising at least one avail wherein a secondary video program can be inserted, said ingress stage module further comprising a receiver that comprises means for monitoring said original video program so as to detect the occurrence of said avail, and means for sending to a control processor a dedicated signal upon such a detection, so that said control processor retrieves and transmits packets of a secondary program to said ingress stage module, said ingress stage module further storing said secondary packets in the packet buffer and sending to the switching module a label for each of said secondary packets, so that the secondary packets will be forwarded to the egress ports according to said secondary labels to be inserted in said avail.

According to a second aspect, the invention relates to a packet switching fabric for broadcasting an original video program to groups of users over at least one dedicated path in a network, said fabric comprising:
- an ingress stage module comprising means for receiving packets of said original program, such as means for extracting a label for each of said packets and means for storing said packets into a packet buffer;
- an egress stage module comprising several egress ports to which packets of the original video program stored in the packet buffer should be forwarded for broadcasting according to said labels;
- a switching module comprising means for receiving from said ingress stage module, for each of the packets, the label of said packet and the local address in the packet buffer wherein said packet is stored, such as means for determining the egress ports on which said packet must be forwarded according to said label;
- a traffic management module comprising means for forwarding packets to the egress ports according to said determination;
the original video program comprising at least one avail wherein a secondary video program can be inserted, the ingress stage module further comprising a receiver that comprises means for monitoring said original video program so as to detect the occurrence of said avail, and means for sending to a control processor a dedicated signal upon such a detection, so that said control processor retrieves and transmits packets of a secondary program to said ingress stage module, said ingress stage module further storing said secondary packets in the packet buffer and sending to the switching module a label for each of said secondary packets, so that the secondary packets will be forwarded to the egress ports according to said secondary labels to be inserted in said avail.

Other aspects and advantages of the invention will become apparent in the following description made with reference to the appended figures, wherein:
- figure 1a represents the overall operation of a packet switching fabric according to the invention and figure 1 b summarizes said operation into a table;
- figure 2 represents two network switching fabrics of the invention that implement cooperatively a DPI process;
- figure 3 represents schematically the architecture of a network switching fabric according to the invention;
- figures 4a and 4b represent the step of forwarding packets of video programs performed by the switching module of a network switching fabric of the invention, respectively wherein only an original video program (figure 4a) and wherein an original video program and several secondary video programs (figure 4b) are to be forwarded.

In relation to those figures, a packet switching fabric SF for broadcasting an original video program to groups of users over at least one dedicated path in a network is described below.

Such a packet switching fabric can notably be met in a network node, wherein the broadcasting of video programs generally takes place between several groups of users. In particular, at a network node, the broadcasting notably takes the form of a point-multipoint path, so that a video program incoming at said node is multicast on several downstream legs of said node.

Nevertheless, the packet switching fabric can also be employed in a point-to-point path scheme, notably for implementing a DPI process into the broadcasting architecture of an operator that provides a VoD (Video on Demand) service.

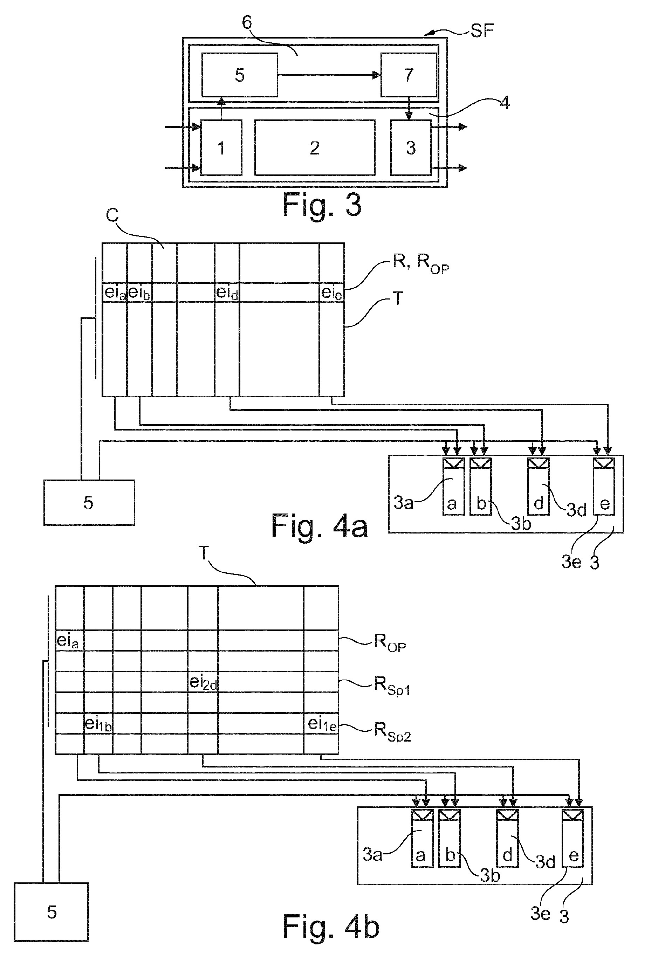

In a known manner, the packet switching fabric SF comprises, as represented on figure 3, an ingress stage module 1 comprising means for receiving packets of the original video program, such as means for extracting a label for each of said packets and means for storing said packets into a local packet buffer 2 implemented in the network node. The label allows the identification of the connection established within the packet switching fabric SF for the original program, so that all the packets of said connection have the same label value. This label can be notably an ingress local connection identifier that is defined during the establishment of the above defined connection, or a global identifier, such as an Ethernet MAC (Media Access Control) address.

Moreover, the packet switching fabric SF comprises an egress stage module 3 comprising several egress ports to which packets of the original video program stored in the packet buffer 2 should be forwarded for broadcasting according to their labels.

In relation to figure 3, the packet switching fabric SF comprises a transport plane 4, said plane comprising the ingress stage module 1, the packet buffer 2 wherein the packets are stored by said ingress stage module and the egress stage module 3.

To do the multicasting, the packet switching fabric SF comprises a switching module 5 that comprises means for receiving from the ingress stage module 1, for each of the packets, the label of said packet and the local address in the packet buffer 2 wherein the packet is stored, such as means for determining the egress ports of the egress stage module 3 on which the packets must be forwarded according to said labels. In relation to figure 3, the packet switching fabric SF comprises a forwarding control plane 6 wherein the switching module 5 is implemented.

In particular, the forwarding control plane 6 can be a L2F (for Level 2 Forwarding) control plane. Such a model of control plane can be notably used by the ATM (Asynchronous Transfer Mode) standard, the MPLS (Multi Protocol Label Switching) standard, or by Ethernet bridges. For example, when the packet switching fabric SF is an MPLS Label Switch Router (LSR), a packet is received by the ingress stage module 1 on a Label Switch Path (LSP) and the switching module 5 uses a label contained into said packet for switching said packet and for forwarding said packet with a new label to the next segment of said LSP path.

In the case of a L2F control plane, the multicast of packets is managed by means of a forwarding table, as for example a Forwarding Information Base (FIB) table, that is indexed by the labels of the packets, said labels being predetermined during a setup phase of connection by provisioning or signalling.

To do so, in relation to figure 4a, the switching module 5 comprises means for implementing a table T with rows R corresponding to video programs and columns C corresponding to the egress ports 3a, 3b, 3d, 3e to which packets should be forwarded, each egress port 3a, 3b, 3d, 3e being assigned to a downstream leg a, b, d, e of the packet switching fabric, the cells of a row R comprising new egress labels eiₐ, ei_{b}, ei_{d}, eiₑ to be assigned to packets of the concerned video program.

As represented, upon the receipt of the label of an incoming packet, the means for determining of the switching module 5 interacts with the means for implementing the table T of said switching module to determine the egress ports 3a, 3b, 3d, 3e on which said packet must be forwarded and to assign a corresponding new egress label eiₐ, ei_{b}, ei_{d}, eiₑ to said packet, and thus according to the ingress label of said packet, i.e. the identification of the connection established by the video program to which said packet belongs with the ingress stage module 1.

Besides, the packet switching fabric SF comprises a traffic management module 7 comprising means for forwarding packets to the egress ports 3a, 3b, 3d, 3e of the egress stage module 3 according to the determination made by the switching module 5. In particular, the traffic management module 7 comprises several FiFo (for First in First out) queues that are each associated to an egress port 3a, 3b, 3d, 3e, such as means for allowing the forwarding of a packet, notably while taking into account the traffic congestion.

Once the determination of egress ports 3a, 3b, 3d, 3e has been made, the switching module 5 transmits to the traffic management module 7, for each of the packets to be forwarded, the new egress label eiₐ, ei_{b}, ei_{d}, eiₑ of said packet and the local address in the packet buffer 2 wherein said packet is stored, so that said traffic management module allocates said new egress label and said address to the FiFo queues that are linked with the concerned egress ports 3a, 3b, 3d, 3e. Moreover, each FiFo queue comprises means for storing the local address and the new egress label eiₐ, ei_{b}, ei_{d}, eiₑ assigned to a packet, waiting that the allowing means of the traffic management module 7 emits a transmission allowance of said packet to its linked egress port 3a, 3b, 3d, 3e.

In the scheme of a DPI process, the original video program comprises at least one avail wherein a secondary video program can be inserted. To do so, the packet switching fabric SF implements means for doing such an insertion, said means being described hereinafter.

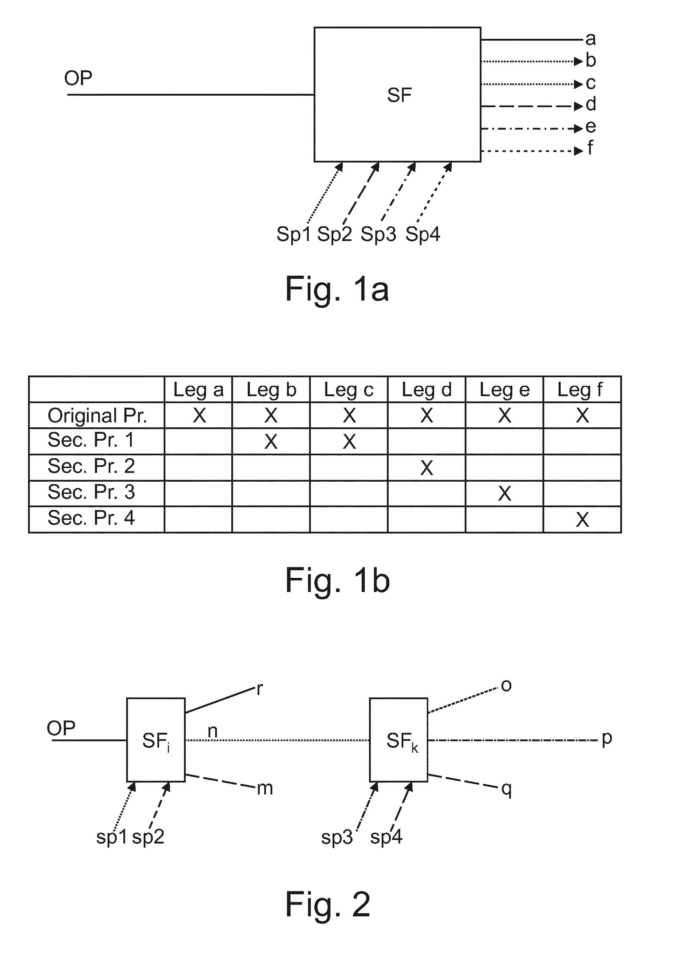

Figures 1 represent a typical scenario of Digital Program Insertion, wherein the packet switching fabric SF multicasts an original video program OP on streams on six different legs a, b, c, d, e, f of the multicast tree, and four different secondary video programs sp1, sp2, sp3, sp4 are to be inserted in the avails of the original video program OP.

For example, the four providers of respectively secondary programs sp1, sp2, sp3, sp4 are interested in different groups of users that watch the original program OP and that are reachable by downstream legs a, b, c, d, e, f of the packet switching fabric SF. Thus, each secondary provider signs a bilateral agreement with the provider of the original program OP to insert its respective secondary programs sp1, sp2, sp3, sp4 in the avails of the original program OP for multicasting said secondary program with said original program on at least a leg a, b, c, d, e, f leading to its targeted group of users.

More precisely, as the group of users reachable by leg a interests none of the secondary program providers, only the original stream OP is multicast on said leg a. On the contrary, the provider of the secondary program sp1 is interested in groups of users reachable by legs b, c, so that the secondary program sp1 is inserted to be multicast with said original program OP on both legs b, c. In the same way, the respective providers of secondary programs sp2, sp3, sp4 are interested in the groups of users reachable respectively by legs d, e, f, so that the secondary programs sp2, sp3, sp4 are inserted to be multicast with the original program OP respectively on said legs d, e, f.

Figure 2 represents another type of scenario of Digital Program Insertion, wherein two consecutive packet switching fabrics SFᵢ, SFₖ in the multicast tree perform cascaded video program multicast. Original video program OP incomes at a first packet switching fabric SFᵢ from which three groups m, n, r of legs start, and two secondary programs sp1, sp2 are to be inserted on said packet switching fabric SFᵢ according to bilateral agreements between the different video program providers. Thus, the secondary programs sp1, sp2 are inserted and multicast with the original program OP respectively on groups of legs n, m, whereas said original program is multicast alone on the last group of legs r.

Moreover, the provider of the secondary program sp1 is also interested in a group of users that is reachable by a group of legs o, said group of legs starting from the packet switching fabric SFₖ that directly follows the packet switching SFᵢ in the multicast tree. Thus, at least one leg of the group n wherein the secondary program sp1 is inserted and multicast with the original program OP incomes at the packet switching fabric SFₖ, so that said fabric multicasts the programs OP, sp1 on the desired group of legs o without making any further program insertion.

Besides, providers of respectively secondary programs sp3, sp4 are interested in groups of users that are reachable by group of legs p, q starting from the packet switching fabric SFₖ. Thus, the packet switching fabric SFₖ multicast on the groups of legs p, q a video stream of the original program OP wherein the inserted secondary program sp1 has been overwritten and replaced in the avail by respectively the secondary programs sp3, sp4.

For inserting secondary programs sp1, sp2, sp3, sp4, the ingress stage module 1 comprises a receiver that comprises means for monitoring the original video program OP so as to detect the occurrence of an avail in said original video program.

In particular, the avail starts in the original video program OP with a splice-in point and ends with a splice-out point, the means of detection of the receiver being adapted to detect the occurrence of said splice-in point and splice-out point, so as to detect a fortiori the occurrence of said avail.

The receiver also comprises means for sending to a control processor a dedicated signal upon detection of an avail, so that said control processor retrieves and transmits packets of a secondary video program sp1, sp2, sp3, sp4 to the ingress stage module 1. In particular, the receiver comprises means for emitting a splice-in signal - respectively a splice-out signal - upon detection of a splice-in point - respectively a splice-out point -, the control processor being adapted to begin - respectively to stop - the retrieval and transmission of a secondary video program to the ingress stage module upon the receipt of said splice-in signal - respectively said splice-out signal.

The control processor can be implemented locally in a packet switching fabric SF, or it can be implemented remotely in the network to be shared between several switching fabrics.

In particular, the control processor is adapted to send, upon the receipt of a signal from the receiver, a request for a secondary video program to at least one dedicated server, so that said server sends packets of such a secondary video program. More precisely, the control processor is adapted to send to the server a request for beginning - respectively stopping - the sending of packets of the secondary video program upon the receipt from the ingress stage module 1 of a splice-in signal - respectively a splice-out signal.

The communication between the control processor and such video program providing servers can be implemented notably according to protocols defined by the Society of Cable Telecommunications Engineers (SCTE), and allows overcoming the constraints of location for said servers, which can thus be located anywhere in the network.

As the control processor retrieves and transmits the packets of a secondary video program, a dedicated connection is established between said secondary program and the ingress stage module 1. The dedicated means of the ingress stage module 1 store said packets into the packet buffer 2, extract, for each of said packets, a secondary label identifying said connection and sends said labels to the switching module 5, as they usually do for an original video program. Thus, these secondary packets will be forwarded to the egress ports 3a, 3b, 3d, 3e according to their secondary labels to be inserted into the avail.

In a known manner, the control processor is adapted to act locally on the packet switching fabric SF for controlling and managing the various planes 4, 6 and modules 1, 2, 3, 5, 7 of said fabric. In particular, the control processor is adapted to act on the L2F control plane 6 for updating the availability of an egress port 3a, 3b, 3d, 3e of the egress stage module 3, for example by completing in the table T of the switching module 5 the cells of the column C corresponding to said egress port with new egress labels for the packets to be forwarded to said port, or by clearing in said table T all the cells of said column, so that no packets will be forwarded to said port anymore.

In a same way, as a new video program is incoming on the ingress stage module 1, the control processor is adapted to update the table T of the switching module 5 by adding a row dedicated to said video program and indexed by the labels of the packets of said program that have been extracted by said ingress stage module.

In this context, the control processor is also adapted to act on the L2F control plane 6 for performing the insertion of a secondary video program into the original video program.

To do so, the control processor comprises means for updating in the table T of the switching module 5 the row R of an original video program wherein a secondary video program is inserted, so that the packets of said secondary video program will be forwarded to the egress ports 3a, 3b, 3d, 3e of the egress stage module 3 instead of the packets of the original video program that correspond to the detected avail of said original video program.

In relation to figure 4b, the table T of the switching module 5 comprises a row R_{OP} for the original video program OP, such as rows Rₛₚ₁, Rₛₚ₂ for respectively two secondary video programs sp1, sp2 that are to be inserted in the original video program OP for being multicast with said original video program on different legs a, b, d, e of the multicast tree, said legs being provided through a dedicated egress port 3a, 3b, 3d, 3e of the egress stage module 3.

As represented on figure 4a, the row R_{OP} initially comprises new egress labels eiₐ, ei_{b}, ei_{d}, eiₑ for its packets to be forwarded respectively to egress ports 3a, 3b, 3d, 3e. Referring now to figure 4b, as secondary video programs sp1, sp2 are received by the ingress stage module 1 (not represented), the means for updating of the processor are adapted to clear, in the row R_{OP} corresponding to the original video program OP, the cells comprising the new egress labels ei_{b}, ei_{d}, eiₑ of the packets of said original program that correspond to the detected avail.

In parallel, the means for updating of the control processor are adapted to complete, in the rows Rₛₚ₁, Rₛₚ₂ corresponding to the secondary video programs sp1, sp2, the cells belonging to the same columns that the cleared cells with the new egress labels ei_{1b}, ei_{2d}, ei₁ₑ of the packets of said secondary video programs. Thus, the packets of the secondary video programs sp1, sp2 will be forwarded to the egress ports 3b, 3d, 3e instead of the packets of the original video program OP that correspond to the avail.

Moreover, when the ingress stage module 1 detects a splice-out point in the original video program OP and emits a signal to the control processor for stopping the insertion of a secondary video program sp1, sp2, the means for updating of said control processor also clear all the cells in the row Rₛₚ₁, Rₛₚ₂ of said secondary program and completes in parallel, in the row R_{OP} of the original video program OP, the cells with new egress labels of the packets of the said original program, so as to restart the broadcast of said original program.

Thus, the invention allows providing important flexibility to the implementation of the DPI process. Indeed, as the DPI process can be considered as a particular case of program switching, any switch encountered along a multicast tree, especially a network node, is potentially a splicer, so that the network operator can deploy easily as many splicers as he desires at the locations he desires, notably by basing on a planification study that takes into account the traffic forecast, the cost of network resources and other parameters.

Such flexibility is notably possible thanks to the simple technical implementation of DPI according to the invention. Indeed, the invention proposes only to modify the ingress stage module 1 of a known packet switching fabric model SF to extend the normal behaviour of said packet switching with a DPI feature. In particular, the modification can consists in a leveraging of the assets that already exist in the packet switching fabric SF and which are directly reusable for the DPI feature. Among them, there are storage capacity of packets in transit, immediate access to all connections, and QoS (Quality of Service) atomic elements such as classification, scheduling, police and shaping.

Moreover, as the DPI process becomes a feature that is implemented on the packet switching fabric SF, for example of a network node, such process can thus benefit from the control and management infrastructure of said network node. Besides, the DPI process does not bring any constraint on the establishment of the distribution tree, as said tree can be setup or modified by using the current control protocols and thus becoming instantly available for implemented DPI process.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Ingress stage module (1) for a packet switching fabric (SF) for broadcasting an original video program (OP) to groups of users over at least one dedicated path (a, b, c, d, e, f) in a network, said ingress stage module comprising means for receiving packets of said original video program, means for extracting a label for each of said packets and means for storing said packets into a packet buffer (2), said ingress stage module further comprising means for sending to a switching module (5) of said fabric, for each of the packets, the label of said packet and the local address in the packet buffer (2) wherein said packet is stored, so that said packets will be forwarded to the ports (3a, 3b, 3d, 3e) of an egress stage module (3) for broadcasting according to said labels, the ingress stage module (1) being **characterized in that** the original video program (OP) comprises at least one avail wherein a secondary video program (sp1, sp2, sp3, sp4) can be inserted, said ingress stage module further comprising a receiver that comprises means for monitoring said original video program so as to detect the occurrence of said avail, and means for sending to a control processor a dedicated signal upon such a detection, so that said control processor retrieves and transmits packets of a secondary program (sp1, sp2, sp3, sp4) to said ingress stage module, said ingress stage module further storing said secondary packets in the packet buffer (2) and sending to the switching module (5) a label for each of said secondary packets, so that the secondary packets will be forwarded to the egress ports (3a, 3b, 3d, 3e) according to said secondary labels to be inserted in said avail.

2. Ingress stage module (1) according to claim 1, **characterized in that** the avail starts in the original video program (OP) with a splice-in point and ends with a splice-out point, the receiver comprising means for emitting a splice-in signal - respectively a splice-out signal - upon detection of said splice-in point - respectively said splice-out point -, the control processor being adapted to begin - respectively to stop - the retrieval and transmission of the secondary video program (sp1, sp2, sp3, sp4) upon the receipt of said splice-in signal - respectively said splice-out signal.

3. Packet switching fabric (SF) for broadcasting an original video program (OP) to groups of users over at least one dedicated path (a, b, c, d, e, f) in a network, said fabric comprising:
- an ingress stage module (1) comprising means for receiving packets of said original program, such as means for extracting a label for each of said packets and means for storing said packets into a packet buffer (2);
- an egress stage module (3) comprising several egress ports (3a, 3b, 3d, 3e) to which packets of the original video program (OP) stored in the packet buffer (2) should be forwarded for broadcasting according to said labels;
- a switching module (5) comprising means for receiving from said ingress stage module, for each of the packets, the label of said packet and the local address in the packet buffer (2) wherein said packet is stored, such as means for determining the egress ports (3a, 3b, 3d, 3e) on which said packet must be forwarded according to said label;
- a traffic management module (7) comprising means for forwarding packets to the egress ports (3a, 3b, 3d, 3e) according to said determination;
the packet switching fabric (SF) being **characterized in that** the original video program (OP) comprises at least one avail wherein a secondary video program (sp1, sp2, sp3, sp4) can be inserted, the ingress stage module (1) further comprising a receiver that comprises means for monitoring said original video program so as to detect the occurrence of said avail, and means for sending to a control processor a dedicated signal upon such a detection, so that said control processor retrieves and transmits packets of a secondary program (sp1, sp2, sp3, sp4) to said ingress stage module, said ingress stage module further storing said secondary packets in the packet buffer (2) and sending to the switching module (5) a label for each of said secondary packets, so that the secondary packets will be forwarded to the egress ports (3a, 3b, 3d, 3e) according to said secondary labels to be inserted in said avail.

4. Packet switching fabric (SF) according to claim 3, **characterized in that** the switching module (5) comprises means for implementing a table (T) with rows (R, R_{OP}, Rₛₚ₁, Rₛₚ₂) corresponding to video programs (OP, sp1, sp2, sp3, sp4) and columns (C) corresponding to the egress ports (3a, 3b, 3d, 3e), the cells of a row (R, R_{OP}, Rₛₚ₁, Rₛₚ₂) comprising new egress labels (eᵢₐ, e_{ib}, e_{id}, eᵢₑ, ei_{1b}, ei_{2d}, ei₁ₑ) to be assigned to packets of the concerned video program (OP, sp1, sp2, sp3, sp4).

5. Packet switching fabric (SF) according to claim 4, **characterized in that** the control processor comprises means for updating the row (R_{OP}) of an original video program (OP) wherein a secondary video program (sp1, sp2, sp3, sp4) is inserted, so that the packets of said secondary program will be forwarded to egress ports (3b, 3d, 3e) instead of the packets of the original program (OP) corresponding to the avail.

6. Packet switching fabric (SF) according to claim 5, **characterized in that** the means for updating of the control processor are adapted to clear, in the row (R_{OP}) corresponding to the original video program (OP), the cells comprising the new egress labels (ei_{b}, ei_{d}, eiₑ) of the packets of said original program corresponding to the avail, said means further being adapted to complete, in the row (Rₛₚ₁, Rₛₚ₂) corresponding to the secondary video program (sp1, sp2), the cells belonging to the same columns (C) that said cleared cells with the new egress labels (ei_{1b}, ei_{2d}, ei₁ₑ) of packets of the secondary video program sp1, sp2).

7. Packet switching fabric (SF) according to any of claims 3 to 6, **characterized in that** the control processor is adapted to send, upon the receipt of a signal from the receiver, a request for a secondary video program (sp1, sp2, sp3, sp4) to at least one dedicated server, so that said server sends packets of such a secondary video program (sp1, sp2, sp3, sp4).

8. Packet switching fabric (SF) according to any of claims 3 to 7, **characterized in that** the avail starts with a splice-in point and ends with a splice-out point in the original video program (OP), the receiver comprising means for emitting a splice-in signal - respectively a splice-out signal - upon detection of said splice-in point - respectively said splice-out point -, the control processor being adapted to begin - respectively to stop - the retrieval and transmission of the secondary video program (sp1, sp2, sp3, sp4) upon the receipt of said splice-in signal - respectively said splice-out signal.

9. Packet switching fabric (SF) according to claims 7 and 8, **characterized in that** the control processor is adapted to send to the server a request for beginning - respectively stopping - the sending of packets of the secondary video program (sp1, sp2, sp3, sp4) upon the receipt of the splice-in signal - respectively the splice-out signal.
